# EUROPEAN PATENT SPECIFICATION

(11) **EP 4 169 731 B1**
(45) Date of publication and mention of the grant of the patent: **09.04.2025**
(21) Application number: 22201070.4
(22) Date of filing: 12.10.2022
(51) Int. Cl.: B60B 1/00, B60B 21/12, G01P 3/487

(54) **A BICYCLE RIM AND A METHOD FOR MANUFACTURING THEREOF**
FAHRRADFELGE UND VERFAHREN ZUR HERSTELLUNG DAVON
JANTE DE BICYCLETTE ET SON PROCÉDÉ DE FABRICATION

(30) Priority: 21.10.2021 NL 2029483
(43) Date of publication of application: 26.04.2023
(73) Proprietor: Holland Mechanics B.V., 1442 PZ Purmerend (NL)
(72) Inventor: WESSELS, Jasper Johannes, Purmerend (NL)
(74) Representative: van Breda, Jacobus

(56) References cited:
- EP-A1- 3 476 621
- WO-A1-03/084804
- DE-A1- 102015 102 465
- DE-U1- 20 180 376
- US-A1- 2017 305 496

## Description

The invention relates to a bicycle rim and a method for manufacturing thereof, wherein such a rim is arranged for enabling measurements of its rotational speed and subsequently enabling measurements of a linear speed of a bicycle of which the bicycle rim forms part.

In the current disclosure, when the term "bicycle" is used, it will be understood by those skilled in the art that this term is intended to be generic and is meant to include unicycles, tricycles, quadricycles and other forms of wheeled, human powered vehicles such as recumbent cycles, wheelchairs, baby stroller joggers and child carts attached to bicycles, but also E-bikes E-scooters and Rollers. The term "bicycle" is therefore not limiting.

WO03/084804 and US2017/0305496 each disclose a bicycle rim comprising at least one magnetized part which is concealably embedded inside the rim.

DE 10 2015 102 465 discloses manufacturing a rim for a muscle-powered vehicle. In order to enable good speed determination or cadence determination, this document teaches that it is advantageous to insert a (permanent) magnet, a (magnetic) sensor, an RFID chip, a counterweight and/or a valve tube in the rim.

US2012204639 discloses a bicycle wheel provided with a magnetic speed sensing apparatus for indicating the speed of a bicycle. In a spoked wheel according to US2012204639, one of the spokes is fabricated from a magnetic material such that each time that particular spoke passes a sensing apparatus a requisite current impulse is transmitted to a handlebar mounted receiving unit. When the bicycle is provided with a disk wheel, a single spoke fabricated from the same magnetic material as above is affixed to the surface of the disk wheel.

An obvious drawback of the bicycle wheel of US2012204639 is the risk of fragilizing the structure of the bicycle wheel by replacing one of the spokes by a spoke made from a magnetic material. Another drawback of this prior art bicycle wheel is that the magnetic material would be visible in the application when the magnetic spoke is fixed on the disk wheel. An additional disadvantage is that the replacement of one spoke brings about extra handling during wheel assembly.

It is an object of the current invention to correct the shortcomings of the prior art and to provide cyclists with an alternative option of a bicycle rim arranged for enabling measurements of the bicycle speed.

This and other objects which will become apparent from the following disclosure, are provided with a bicycle rim, a bicycle wheel, and a method of manufacturing a bicycle rim having the features of one or more of the appended claims.

According to a first aspect of the invention the bicycle rim comprises at least one magnetized part wherein the at least one magnetized part is concealably embedded inside the rim, wherein the rim comprises at least one joint sleeve and that the at least one magnetized part is embedded in said at least one joint sleeve. Such embodiment according to the invention preserves the mechanical structure of the rim all the while discretely providing said rim with the magnetized part needed for speed measurements.

Furthermore, it is preferable that the at least one joint sleeve is shaped according to an internal profile of the rim. And, that the at least one joint sleeve is curved according to a curvature of the rim. These features ensure that the at least one sleeve is tightly fitted inside the rim.

Metallic rims are usually made by bending a metallic extrusion into a coil, cutting the coil into open hoops and welding the joints of said open hoops resulting in closed hoops. Top quality rims manufacturers provide a sleeve to the rim and glue the rim at the joint of the open hoop, wherein the joint sleeve is shaped according to an internal profile of the rim. This technique results in a stronger and safer joint. The current invention advantageously proposes to embed a magnetized part in the joint sleeve during the manufacturing process of said rim.

According to a further aspect of the invention, the rim may comprise at least two joint pins wherein the at least one magnetized part is embedded in an internal space of the rim between the at least two joint pins. The internal space of the rim between the two joint pins can advantageously be used for concealing the magnetized part. Such embodiment preserves the mechanical structure of the rim all the while discretely providing said rim with the magnetized part needed for speed measurements.

Advantageously, the at least one magnetized part is a permanent magnet. The vast majority of speed sensors detect the motion of ferromagnetic structures, such as permanent magnets, based on the variation in magnetic flow. These variations can be converted into electrical variables and subsequently conditioned into speed measurements.

Embedding a magnetized part in the rim could disturb the rotational balance of the rim. In order to solve such issue, the rim comprises an aperture for a valve of a tube mountable on the rim wherein said aperture and the at least one magnetized part are substantially diametrically opposite to each other. Such embodiment allows for counterbalancing the weight of the at least one magnetized part with the weight of the valve.

Furthermore, it may be preferable that the rim comprises at least one mass concealably embedded in said rim substantially diametrically opposite to the at least one magnetized part. Suitably, the weight of at least one mass is substantially equal to the mass of the at least one magnetized part.
Such embodiment allows for exact counterbalancing the weight of the at least one magnetized part with the weight of the at least one mass.

According to a second aspect of the invention, a bicycle wheel is provided with the rim according to the first aspect of the invention.

According to a third aspect of the invention, the method for manufacturing a bicycle rim comprises the steps of
- bending a metallic extrusion into a coil;
- cutting the coil into open hoops
- providing at least one joint sleeve inside at least one end of an open hoop; and
- closing the open hoop,
wherein said method further comprises the step of embedding at least one magnetized part in the at least one joint sleeve.

Such embodiment preserves the mechanical structure of the rim all the while discretely providing said rim with the magnetized part needed for speed measurements. This technique results in a stronger and safer rim suitable for speed measurements via magnetic sensors. The order of the aforementioned steps may vary according to the requirements of the manufacturing line. In a semi-automated manufacturing line the at least one magnetized part may be brought inside the joint sleeve before providing the joint sleeve in the open hoop. In a fully-automated manufacturing line, the sleeve may first be embedded in the open hoop before embedding the at least one magnetized part in said joint sleeve.

Alternatively, said method comprises the steps of:
- bending a metallic extrusion into a coil;
- cutting the coil into open hoops
- providing at least two joint pins inside at least one end of an open hoop; and
- closing the open hoop,
wherein said method comprises the step of embedding at least one magnetized part in an internal space of the metallic extrusion between said at least two joint pins.

Depending on the type of the rim and the requirements of the manufacturing line, the step of closing the open hoop comprises at least one of the following steps:
- gluing the open hoop;
- riveting the open hoop;
- welding the open hoop; and
- mechanically securing by pressing the open hoop.
One or a combination of these steps may be executed to insure the optimal closing robustness.

It is also possible to apply the invention with carbon fiber rims. Carbon fiber rims are made of two components; carbon fiber and epoxy resin. When molding a carbon fiber wheel, pieces of pre-preg carbon fiber are laid into molds. Pre-peg is raw carbon fiber that is impregnated with an epoxy resin. Once the pre-preg carbon is laid in the mold, it is placed in an oven where it goes through a prescribed heating cycle know as a ramp cycle. When the carbon fiber exits the mold, it is a hard finished part.
When the rim is made of carbon fiber material, the method of the invention comprises the steps of:
- providing raw carbon fibers in a hoop shaped mold; and
- hardening said raw carbon fiber inside an oven,
wherein said method comprises the step of providing at least one magnetized part in said raw carbon fibers. A clear advantage of such embodiment is that the at least one magnetized part becomes an integral part of the carbon fiber rim, thus enabling said rim to be suitable for speed measurements via magnetic sensors without compromising on the mechanical structure or the visual aspects of said rim.

Furthermore, the method of the invention may comprise the step of concealably embedding at least one mass in said rim substantially diametrically opposite to the at least one magnetized part, wherein preferably said at least one mass is substantially equal to the mass of the at least one magnetized part. Such embodiment allows for an exact counterbalancing of the weight of the at least one magnetized part with the weight of the at least one mass.

Advantageously, the method of the invention may comprise the step of concealably embedding at least one magnetized part inside said rim substantially diametrically opposite to a valve of the rim. Such embodiment allows for counterbalancing the weight of the at least one magnetized part with the weight of the valve.

The invention will hereinafter be further elucidated with reference to the drawing of an exemplary embodiment of a bicycle rim, a bicycle wheel and an assembly according to the invention that is not limiting as to the appended claims.

In the drawing:
- figure 1 shows a first embodiment of a bicycle rim of the invention in an exploded view;
- figure 2 shows a second embodiment of a bicycle rim of the invention in an exploded view;
- figure 3 shows a wheel of the invention in a side view;
- figure 4 shows an assembly of the invention in a front view; and
- figure 5 shows the manufacturing steps of a rim according to the invention.

Whenever in the figures the same reference numerals are applied, these numerals refer to the same parts.

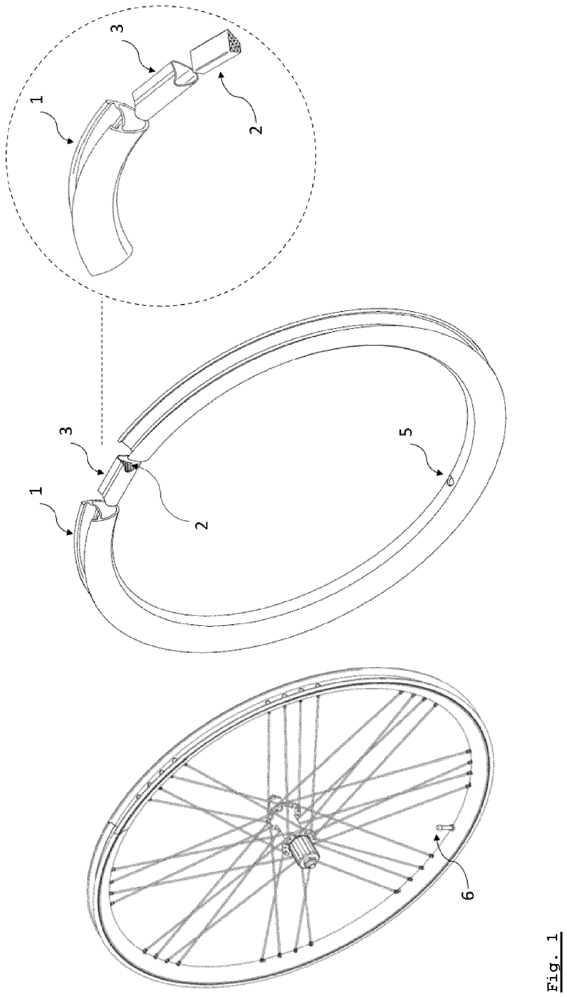

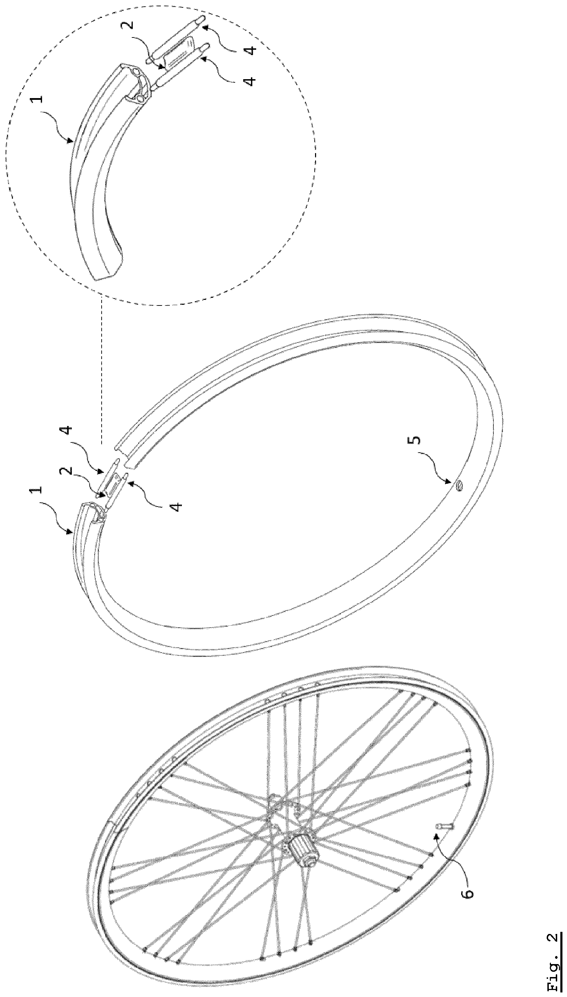

Figure 1 shows how a magnetized part 2 can be embedded in a joint sleeve 3 which is to be embedded in the rim 1 diametrically opposite to the bicycle wheel's valve 6 and a valve aperture 5 through which the valve 6 is stuck. The mass of the magnetized part 2 is preferably substantially counterbalanced by the mass of the valve 6. Equally, figure 2 shows how the magnetized part 2 can be embedded in an internal space of the rim 1 between two joint pins 4 diametrically opposite the valve 6 and the valve aperture 5. The mass of the magnetized part 2 being again substantially counterbalanced by the mass of the valve 6.

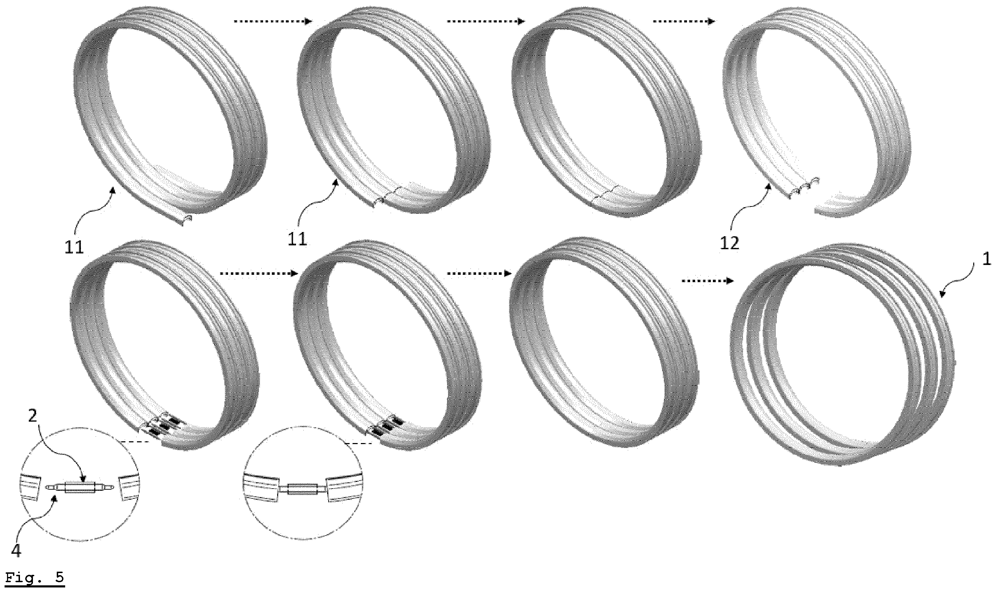

Figure 5 shows the steps involved in manufacturing the bicycle rim 1. A metallic extrusion is bent into a coil 11, then the coil 11 is cut into open hoops 12. Next, according to the embodiment of fig. 2, the at least two joint pins 4 and the at least one magnetized 2 part are embedded inside the rim 1, then the open hoops 12 are closed. The same process is used when in the embodiment of fig. 1 the at least one joint sleeve 3 and the at least one magnetized part is embedded inside the rim 1.

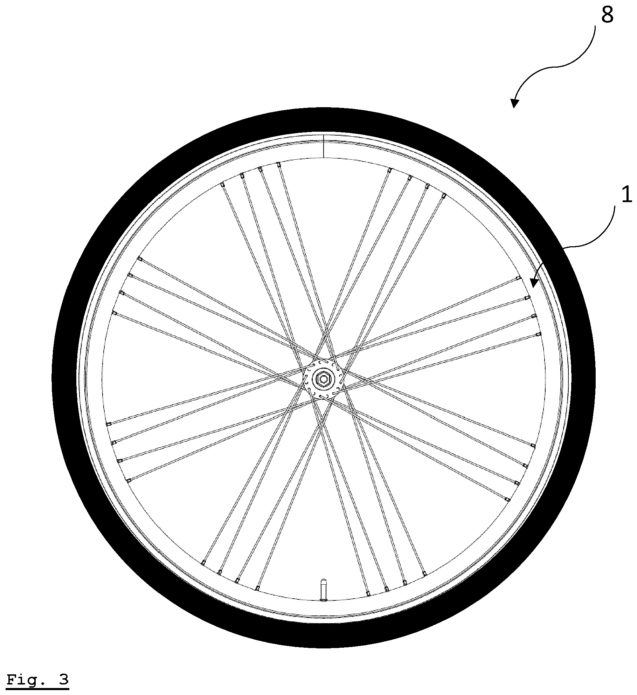

Figure 3 shows the wheel 8 comprising a rim 1 according to the invention. It is understood that a wheel is a rim combined with a tire and/or a tube.

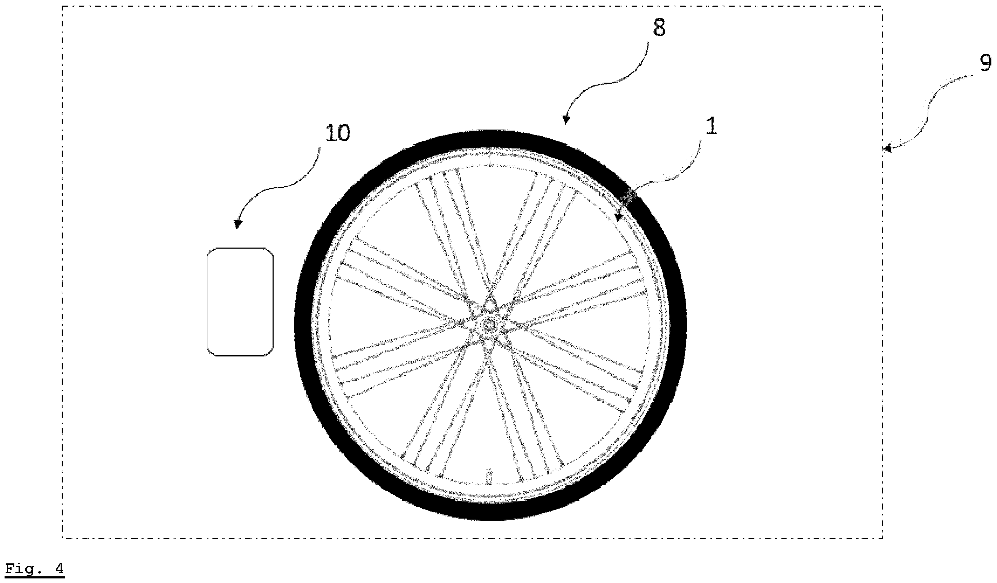

Figure 4 shows the assembly 9 of the wheel 8 and an electromagnetic sensor 10. The electromagnetic sensor being placed in a proximity of the wheel 8 for picking up an electromagnetic signal triggered by the movement of the magnetized part 2. Said electromagnetic signal is indicative for the bicycle speed.

Although the invention has been discussed in the foregoing with reference to an exemplary embodiment of a rim, a bicycle wheel and a method of manufacturing according to the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. A bicycle rim (1) comprising at least one magnetized part (2) which is concealably embedded inside the rim (1), said rim (1) comprising at least one joint sleeve (3), **characterized in that** the at least one magnetized part (2) is embedded in said at least one joint sleeve (3).

2. The rim (1) according to claim 1, **characterized in that** the at least one joint sleeve (3) is shaped according to an internal profile of the rim (1).

3. The rim (1) according to claim 1 or 2, **characterized in that** the at least one joint sleeve (3) is curved according to a curvature of the rim (1).

4. The rim (1) according to anyone of claims 1 - 3, **characterized in that** the rim (1) comprises at least two joint pins (4) wherein the at least one magnetized part (2) is embedded in an internal space of the rim (1) between the at least two joint pins (4).

5. The rim (1) according to anyone of claims 1 - 4, **characterized in that** the at least one magnetized part (2) is a permanent magnet.

6. The rim (1) according to anyone of claims 1 - 5, wherein said rim (1) comprises an aperture (5) for a valve (6) of a tube mountable on the rim (1), **characterized in that** said aperture (5) and the at least one magnetized part (2) are substantially diametrically opposite to each other.

7. The rim (1) according to anyone of claims 1 - 6, **characterized in that** the rim (1) comprises at least one mass (7) concealably embedded in said rim (1) substantially diametrically opposite to the at least one magnetized part (2).

8. The rim (1) according to claim 7, **characterized in that** the weight of at least one mass (7) is substantially equal to the mass of the at least one magnetized part (2).

9. A bicycle wheel (8), **characterized in that** said wheel (8) is provided with the rim (1) according to anyone of claims 1 - 8.

10. A method for manufacturing a bicycle rim (1), comprising the steps of:
- bending a metallic extrusion into a coil (11);
- cutting the coil into open hoops (12);
- providing at least one joint sleeve (3) inside at least one end of an open hoop (12); and
- closing the open hoop (12),
**characterized in that** said method comprises the step of embedding at least one magnetized part (2) in the at least one joint sleeve (3).

11. The method for manufacturing a bicycle rim (1) according to claim 10, comprising the steps of:
- providing at least two joint pins (4) inside at least one end of an open hoop (12); and
**characterized in that** said method comprises the step of embedding the at least one magnetized part (2) in an internal space of the metallic extrusion between said at least two joint pins (4).

12. The method for manufacturing a bicycle rim (1) according to anyone of claims 10-11, **characterized in that** the step of closing the open hoop (12) comprises at least one of the following steps:
- gluing the open hoop (12);
- riveting the open hoop (12);
- welding the open hoop (12); and
- mechanically securing by pressing the open hoop (12).

13. The method for manufacturing a bicycle rim (1) according to claim 10, comprising the steps of:
- providing raw carbon fibers in a hoop shaped mold; and
- hardening said raw carbon fiber inside an oven,
**characterized in that** said method comprises the step of providing at least one magnetized part (2) in said raw carbon fibers.

14. The method for manufacturing a bicycle rim (1) according to anyone of claims 10-13, **characterized in that** said method comprises the step of concealably embedding at least one mass in said rim (1) substantially diametrically opposite to the at least one magnetized part (2), wherein preferably said at least one mass is substantially equal to the mass of the at least one magnetized part (2).

15. The method for manufacturing a bicycle rim (1) according to anyone of claims 10-14, **characterized in that** said method comprises the step of concealably embedding at least one magnetized part (2) inside said rim (1) substantially diametrically opposite to a valve (6) of the rim (1).

## Patentansprüche

1. Fahrradfelge (1) umfassend zumindest ein magnetisiertes Teil (2), das verdeckbar in den Innenraum der Felge (1) eingebettet ist, wobei die Felge (1) zumindest eine Verbindungshülse (3) umfasst, **dadurch gekennzeichnet, dass** das zumindest eine magnetisierte Teil (2) in der zumindest einen genannten Verbindungshülse (3) eingebettet ist.

2. Felge (1) nach Anspruch 1, **dadurch gekennzeichnet, dass** die zumindest eine Verbindungshülse (3) entsprechend einem inneren Profil der Felge (1) gestaltet ist.

3. Felge (1) nach Anspruch 1 oder 2, **dadurch gekennzeichnet, dass** die zumindest eine Verbindungshülse (3) entsprechend einer Krümmung der Felge (1) gebogen ist.

4. Felge (1) nach einem der Ansprüche 1 bis 3, **dadurch gekennzeichnet, dass** die Felge (1) zumindest zwei Verbindungsstifte (4) umfasst, wobei das zumindest eine magnetisierte Teil (2) in einem Innenraum der Felge (1) zwischen den zumindest zwei Verbindungsstiften (4) eingebettet ist.

5. Felge (1) nach einem der Ansprüche 1 bis 4, **dadurch gekennzeichnet, dass** der zumindest eine magnetisierte Teil (2) ein Permanentmagnet ist.

6. Felge (1) nach einem der Ansprüche 1 bis 5, wobei die genannte Felge (1) eine Öffnung (5) für ein Ventil (6) eines an der Felge (1) montierbaren Schlauchs umfasst, **dadurch gekennzeichnet, dass** die genannte Öffnung (5) und das zumindest eine magnetisierte Teil (2) einander im Wesentlichen diametral gegenüberliegen.

7. Felge (1) nach einem der Ansprüche 1 bis 6, **dadurch gekennzeichnet, dass** die Felge (1) zumindest ein Masseelement (7) umfasst, welches verdeckt in der genannten Felge (1) im Wesentlichen diametral gegenüber dem zumindest einen magnetisierten Teil (2) eingebettet ist.

8. Felge (1) nach Anspruch 7, **dadurch gekennzeichnet, dass** das Gewicht des zumindest einen Massenelements (7) im Wesentlichen gleich dem Massenelement des zumindest einen magnetisierten Teils (2) ist.

9. Fahrradrad (8), **dadurch gekennzeichnet, dass** das genannte Rad (8) mit der Felge (1) nach einem der Ansprüche 1 bis 8 versehen ist.

10. Herstellungsverfahren für eine Fahrradfelge (1), umfassend die folgenden Schritte:
- Biegen eines metallischen Strangpressprofils zu einer Spule (11);
- Schneiden der Spule in offene Ringe (12);
- Bereitstellen von zumindest einer Verbindungshülse (3) innerhalb zumindest eines Endes eines offenen Ringes (12); und
- Schließen des offenen Rings (12),
**dadurch gekennzeichnet, dass** das genannte Verfahren den Schritt des Einbettens zumindest eines magnetisierten Teils (2) in die zumindest eine Verbindungshülse (3) umfasst.

11. Herstellungsverfahren einer Fahrradfelge (1) nach Anspruch 10, umfassend die folgenden Schritte:
- Bereitstellen von zumindest zwei Verbindungsstiften (4) innerhalb zumindest eines Endes eines offenen Ringes (12); und
**dadurch gekennzeichnet, dass** das genannte Verfahren den Schritt des Einbettens des zumindest einen magnetisierten Teils (2) in einen Innenraum des metallischen Strangpressprofils zwischen den zumindest zwei Verbindungsstiften (4) umfasst.

12. Herstellungsverfahren einer Fahrradfelge (1) nach einem der Ansprüche 10 bis 11, **dadurch gekennzeichnet, dass** der Schritt des Schließens des offenen Rings (12) zumindest einen der folgenden Schritte umfasst:
- Aufkleben des offenen Ringes (12);
- Nieten des offenen Ringes (12);
- Schweißen des offenen Ringes (12); und
- mechanisches Sichern, indem der offene Ring (12) zusammengedrückt wird.

13. Herstellungsverfahren einer Fahrradfelge (1) nach Anspruch 10, umfassend die folgenden Schritte:
- Bereitstellen von Rohkohlenstofffasern in einer ringförmigen Form; und
- Aushärten der genannten Rohkohlenstofffaser in einem Ofen,
**dadurch gekennzeichnet, dass** das genannte Verfahren den Schritt des Bereitstellens zumindest eines magnetisierten Teils (2) in den genannten Rohkohlenstofffasern umfasst.

14. Herstellungsverfahren für eine Fahrradfelge (1) nach einem der Ansprüche 10 bis 13, **dadurch gekennzeichnet, dass** das genannte Verfahren den Schritt des verdeckten Einbettens zumindest eines Massenelements in die genannte Felge (1) im Wesentlichen diametral gegenüber dem zumindest einen magnetisierten Teil (2) umfasst, wobei vorzugsweise das zumindest eine genannte Massenelement im Wesentlichen gleich dem Massenelement des zumindest einen magnetisierten Teils (2) ist.

15. Herstellungsverfahren für eine Fahrradfelge (1) nach einem der Ansprüche 10 bis 14, **dadurch gekennzeichnet, dass** das genannte Verfahren den Schritt des verdeckten Einbettens zumindest eines magnetisierten Teils (2) innerhalb der Felge (1) im Wesentlichen diametral gegenüber einem Ventil (6) der genannten Felge (1) umfasst.

## Revendications

1. Jante de bicyclette (1) comprenant au moins une partie aimantée (2) qui est incorporée d'une manière apte à être dissimulée à l'intérieur de la jante (1), ladite jante (1) comprenant au moins un manchon de raccordement (3), **caractérisée en ce que** l'au moins une partie aimantée (2) est incorporée dans ledit au moins un manchon de raccordement (3).

2. Jante (1) selon la revendication 1, **caractérisée en ce que** l'au moins un manchon de raccordement (3) est façonné selon un profil interne de la jante (1).

3. Jante (1) selon la revendication 1 ou 2, **caractérisée en ce que** l'au moins un manchon de raccordement (3) est incurvé selon une courbure de la jante (1).

4. Jante (1) selon l'une quelconque des revendications 1 à 3, **caractérisée en ce que** la jante (1) comprend au moins deux tiges de raccordement (4) dans laquelle l'au moins une partie aimantée (2) est incorporée dans un espace interne de la jante (1) entre les au moins deux tiges de raccordement (4).

5. Jante (1) selon l'une quelconque des revendications 1 à 4, **caractérisée en ce que** l'au moins une partie aimantée (2) est un aimant permanent.

6. Jante (1) selon l'une quelconque des revendications 1 à 5, dans laquelle ladite jante (1) comprend une ouverture (5) pour une valve (6) d'une chambre à air apte à être montée sur la jante (1), **caractérisée en ce que** ladite ouverture (5) et l'au moins une partie aimantée (2) sont sensiblement diamétralement opposées l'une à l'autre.

7. Jante (1) selon l'une quelconque des revendications 1 à 6, **caractérisée en ce que** la jante (1) comprend au moins une masse (7) incorporée d'une manière apte à être dissimulée dans ladite jante (1) sensiblement diamétralement opposée à l'au moins une partie aimantée (2).

8. Jante (1) selon la revendication 7, **caractérisée en ce que** le poids d'au moins une masse (7) est sensiblement égal à la masse de l'au moins une partie aimantée (2).

9. Roue de bicyclette (8), **caractérisée en ce que** ladite roue (8) est munie de la jante (1) selon l'une quelconque des revendications 1 à 8.

10. Procédé de fabrication d'une jante de bicyclette (1), comprenant les étapes de :
- le cintrage d'une extrusion métallique en une bobine (11) ;
- la découpe de la bobine en cerceaux ouverts (12) ;
- la fourniture d'au moins un manchon de raccordement (3) à l'intérieur d'au moins une extrémité d'un cerceau ouvert (12) ; et
- la fermeture du cerceau ouvert (12),
**caractérisé en ce que** ledit procédé comprend l'étape de l'incorporation d'au moins une partie aimantée (2) dans l'au moins un manchon de raccordement (3).

11. Procédé de fabrication d'une jante de bicyclette (1) selon la revendication 10, comprenant les étapes de :
- la fourniture d'au moins deux tiges de raccordement (4) à l'intérieur d'au moins une extrémité d'un cerceau ouvert (12) ; et
**caractérisé en ce que** ledit procédé comprend l'étape de l'incorporation de l'au moins une partie aimantée (2) dans un espace interne de l'extrusion métallique entre lesdites au moins deux tiges de raccordement (4).

12. Procédé de fabrication d'une jante de bicyclette (1) selon l'une quelconque des revendications 10 à 11, **caractérisé en ce que** l'étape de la fermeture du cerceau ouvert (12) comprend au moins l'une des étapes suivantes :
- le collage du cerceau ouvert (12) ;
- le rivetage du cerceau ouvert (12) ;
- le soudage du cerceau ouvert (12) ; et
- la fixation mécanique par pressage du cerceau ouvert (12).

13. Procédé de fabrication d'une jante de bicyclette (1) selon la revendication 10, comprenant les étapes de :
- la fourniture de fibres de carbone crues dans un moule en forme de cerceau ; et
- le durcissement desdites fibres de carbone crues à l'intérieur d'un four, **caractérisé en ce que** ledit procédé comprend l'étape de la fourniture d'au moins une partie aimantée (2) dans lesdites fibres de carbone crues.

14. Procédé de fabrication d'une jante de bicyclette (1) selon l'une quelconque des revendications 10 à 13, **caractérisé en ce que** ledit procédé comprend l'étape de l'incorporation, d'une manière apte à être dissimulée, d'au moins une masse dans ladite jante (1) sensiblement diamétralement opposée à l'au moins une partie aimantée (2), dans lequel de préférence ladite au moins une masse est sensiblement égale à la masse de l'au moins une partie aimantée (2).

15. Procédé de fabrication d'une jante de bicyclette (1) selon l'une quelconque des revendications 10 à 14, **caractérisé en ce que** ledit procédé comprend l'étape de l'incorporation, d'une manière apte à être dissimulée, d'au moins une partie aimantée (2) à l'intérieur de ladite jante (1) sensiblement diamétralement opposée à une valve (6) de la jante (1).
